Europäisches Patentamt

European Patent Office

Office européen des brevets

(19)

(11) EP 0 651 864 B1

(12) **EUROPÄISCHE PATENTSCHRIFT**

(45) Veröffentlichungstag und Bekanntmachung des Hinweises auf die Patenterteilung:
**07.02.1996 Patentblatt 1996/06**

(21) Anmeldenummer: **93914615.5**

(22) Anmeldetag: **07.07.1993**

(51) Int Cl.⁶: **F16H 7/08**, F16H 7/12

(86) Internationale Anmeldenummer:
**PCT/DE93/00610**

(87) Internationale Veröffentlichungsnummer:
**WO 94/02756 (03.02.1994 Gazette 1994/04)**

(54) **SELBSTTÄTIGES SPANN- UND DÄMPFUNGSELEMENT FÜR ENDLOSKETTENTRIEBE**

AUTOMATIC TENSIONING AND DAMPING COMPONENT FOR ENDLESS CHAIN DRIVES

ELEMENT AUTOMATIQUE DE SERRAGE ET D'AMORTISSEMENT POUR ENTRAINEMENTS PAR CHAINE SANS FIN

(84) Benannte Vertragsstaaten:
**AT BE CH DE DK ES FR GB IT LI NL PT SE**

(30) Priorität: **27.07.1992 DE 4224753**

(43) Veröffentlichungstag der Anmeldung:
**10.05.1995 Patentblatt 1995/19**

(73) Patentinhaber:
- **EBERT, Siegfried**
  **D-04509 Freiroda (DE)**
- **EBERT, Ilona**
  **D-04509 Freiroda (DE)**

(72) Erfinder:
- **EBERT, Siegfried**
  **D-04509 Freiroda (DE)**
- **EBERT, Ilona**
  **D-04509 Freiroda (DE)**

(74) Vertreter: **Köhler, Manfred, Dipl.-Ing.(FH)**
**D-04229 Leipzig (DE)**

(56) Entgegenhaltungen:
**DD-C- 275 166          FR-A- 1 111 228**
**US-A- 1 567 494**

- **PATENT ABSTRACTS OF JAPAN vol. 10, no. 130 (M-478)(2187) 14. Mai 1986 & JP-A-60 256 659 (CANON) 18. Dezember 1985**

## Beschreibung

Die Erfindung betrifft ein selbsttätiges Spann- und Dämpfungselement für Endloskettentriebe.

Seine Anwendung ist universell für diametral zu spannende Kettentriebe.

Aus dem DD-WP 275 166 ist ein selbsttätiges Spann- und Dämpfungselement bekannt. Dabei handelt es sich um ein zwischen der Form eines konzentrischen Ringes und der Form einer Cassinischen Kurve mit ellipsenähnlicher Gestalt elastisch verformbaren, zur Kette formpaarigen achslosen Ring aus elastischem Werkstoff.

Dieses Spann- und Dämpfungselement wird zwischen den Trumen des Kettentriebes angeordnet, greift mit seinem Zahnkranz in diese ein, sichert damit selbsttätig seine Lage im Kettentrieb und spannt diametral. Es rollt achslos und kettengeschwindigkeitssynchron zwischen den bewegten Trumen. Kettenlängungen werden ausgeglichen, indem das vorgespannte Spann- und Dämpfungselement die Form eines konzentrischen Ringes anstrebt, wobei sich der Abstand der Nebenscheitelpunkte durch das Symmetriezentrum maximal bis zum Durchmesser des konzentrischen Ringes vergrößert. Zum Dämpfen von Belastungsspitzen erfolgt diese Funktion entgegengesetzt durch Verringern des Abstandes der Nebenscheitelpunkte.

Vorteilhafterweise sind derartige Spann- und Dämpfungselemente aus Werkstoffen mit definierten elastischen, visko-elastischen und plastischen Verformungsparametern hergestellt.

Der Nachteil dieses bekannten selbsttätigen Spann- und Dämpfungselementes besteht darin, daß es während des Rollens Rückverformungsenergie verbraucht.

Diese Rückverformungsenergie wird nicht in jedem Fall zur verzögerungsfreien Unterdrückung von Longitudinalschwingungen und größeren Transversalschwingungen des Kettentriebes benötigt.

Die technische Ursache dieses Nachteils besteht in der kettengeschwindigkeitssynchronen Rollbewegung des selbsttätigen Spann- und Dämpfungselementes aus dem lagesicherndem Eingriff des Zahnprofils in die Trume. Dabei muß werkstoffabhängig der plastische Verformungsanteil sowie bei entsprechendem Nachlauf der werkstoffabhängigen viskoelastischen Rückstellung gegenüber der geschwindigkeitsabhängig erzwungenen Rückverformung der viskoelastische Verformungsanteil des Ringes rückverformt werden.

Ziel der Erfindung ist ein selbsttätiges Spann- und Dämpfungselement für Endloskettentriebe mit geringerem Energieverbrauch.

Die technische Aufgabe der Erfindung besteht in der Entwicklung eines selbsttätigen Spann- und Dämpfungselementes für Endloskettentriebe, welches selbsttätig lagesichernd nicht kettengeschwindigkeitssynchron rollt.

Die technische Aufgabe wird gelöst durch die kennzeichnenden Merkmale der Patentansprüche.

Die mit der Erfindung hauptsächlich erzielten Vorteile sind darin zu sehen, daß das selbsttätige Spann- und Dämpfungselement gleitend zwischen den Trumen selbsthaltend ist, ohne synchron zu den Trumen zu rollen und dafür Energie zu verbrauchen.

Während des Betriebszustand nimmt es, selbstregelnd zum Spannkraftminimum, im Bereich der durch das Spannen erzeugten Lostrumwinkelung, zugleich Bereich der größten Trumspreizweite, gleitend eine Lage ein, in der es kein Kettenrad berührt.

Das erfindungsgemäße selbsttätige Spann- und Dämpfungselement ist selbstschmierend im geschmierten Kettentrieb. Es ist drehrichtungs- und lageunabhängig sowie in mehrreihigen Ketten mehrfach nebeneinander anordenbar. Darüber hinaus kann es auch mehrspurig- einstückig ausgeführt werden. Seine Spannwegnachstellung erfolgt selbsttätig bis zum eigenen spannungsfreien Zustand.

Die Montage zwischen die Trume erfolgt im vorgespannten Zustand in der Abstandsmitte der Kettenräder durch einfaches Einrasten in die Kettenspuren.

Das aus Bogenstück und geradem oder gebogenen Kettenführungsstück bestehende selbsttätige Spann- und Dämpfungselement wird derart zwischen den Trumen angeordnet, daß der elastische Bogen im Lostrum geführt wird.

Eine vorteilhafte Ausgestaltung der Erfindung ist in Anspruch 1 angegeben.

Dabei wird von einem selbsttätigen Spann- und Dämpfungselement mit konzentrischer Ringform im ungespannten Zustand ausgegangen. Dieses Element weist bei radialer Belastung über den gesamten Ringumfang homogene Biegesteifigkeit und Dämpfung auf.

Die tangential angreifenden Momente aus der Reibung zu den bewegten Trumen führen zu einer sehr langsamen Rollbewegung des Elementes in der Drehrichtung des Kettentriebes.

Die Geschwindigkeit dieser Rollbewegung ist abhängig vom Betrag der tangential angreifenden Momente sowie der Biegesteifigkeit, Dämpfung und Kriechneigung des Materials. Durch diese Rollbewegung kommt der gesamte Außenumfang des selbsttätigen Spann- und Dämpfungselementes zyklisch in Kontakt zu den Trumen.

Damit werden die Verschleißflächen um ein Mehrfaches vergrößert, eine gleichmäßige Abnutzung des führungsformpaarigen Außenumfanges erreicht und dementsprechend der Verschleiß verringert.

Diese Ausgestaltung der Erfindung ist auch in Kettentrieben mit Drehrichtungsumkehr einsetzbar.

Ausführungsbeispiel:

In den Zeichnungen werden Auführungsbeispiele der Erfindung gezeigt.

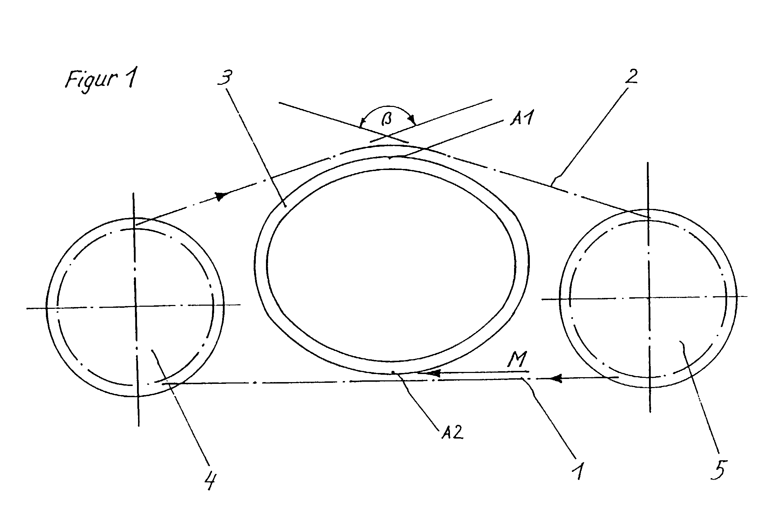

Figur 1 zeigt ein zwischen Lasttrum 1 und Lostrum 2 eines nichtübersetzenden, rechtsdrehenden Kettentriebes führungsformpaariges, von einer im ungespannten Zustand von einer konzentrischen Ringform ausgehendes, vorgespannt angeordnetes selbsttätiges Spann- und Dämpfungselement 3 mit in diesem Zustand ellipsenähnlicher Gestalt.

Das Element ist führungsformpaarig zur kette durch ein rechteckiges Führungsprofil am Außenumfang, welches schmaler ist als die lichte Weite der Kette; das bedeutet folgendes: Das Element 3 weist eine ebene, gegenüber der lichten Weite der Kette schmalere, umlaufende Mantelfläche auf. Die umlaufende Mantelfläche bildet mit ihren anschließenden Seitenflächen ein mit Führungsspiel zum Profil der Kette passendes umlaufendes Führungsprofil. Die kleinste Achse A1, A2 des selbsttätigen Spann- und Dämpfungselementes ist größer als der Durchmesser des größten Kettenrades des Kettentriebes.

Der Lasttrum zwischen dem treibenden Kettenrad 4 und dem getriebenen Kettenrad 5 verläuft gerade, während der Lostrum durch die Spannkraft des selbsttätigen Spann- und Dämpfungselementes eine Lostrumwinkelung β < 180° aufweist. Die für die Lostrumwinkelung nutzbare Lostrumlänge wird durch den Lostrumdurchhang gewährleistet.

Die Spannkraft wird dadurch erzeugt, daß die durch Vorspannen des ursprünglich konzentrischen Ringes bewirkte ellipsenähnliche Form die konzentrische Form anstrebt. Durch die Formpaarung zur Kettenspur von Last- und Lostrum ist das selbsttätige Spann- und Dämpfungselement selbstführend und zwischen diesen gleitend gelagert.

Durch das Erzeugen der Lostrumwinkelung ist es in seinem Abstand zu den Kettenrädern selbstregelnd; es strebt stets gleitend das Spannkraftminimum, zugleich größter Abstand A1,A2 , welches im Bereich der größten Trumspreizweite liegt, an. Damit entzieht es sich selbst neben der Spurführung in der Kette einen weiteren Freiheitsgrad und nimmt in der Abstandsmitte der Kettenräder eine Lage ein, in der es kein Kettenrad berührt.

Infolge der entgegengerichteten Bewegung der Kettentrume wirken auf das selbsttätige Spann- und Dämpfungselement tangential angreifende Momente aus der Reibung zu den Trumen. Diese Momente summieren sich zum Drehmoment M. Das beispielsweise gezeigte selbsttätige Spann- und Dämpfungselement ist über seine Ringform bezüglich Biegesteifigkeit, Dämpfung und Kriechneigung homogen. Das Drehmoment M führt zu einer sehr langsamen Rollbewegung des selbsttätigen Spann- und Dämpfungselementes in der Drehrichtung des Kettentriebes.

Durch diese Rollbewegung kommt bei entsprechender großer Betriebszeit der gesamte Außenumfang des selbsttätigen Spann- und Dämpfungselementes in Kontakt zu den Trumen. Damit liegt eine Verschleißfläche über den gesamten Außenumfang vor, es wird eine gleichmäßige Abnutzung des Führungsprofils erreicht und dementsprechend der Verschleiß verringert.

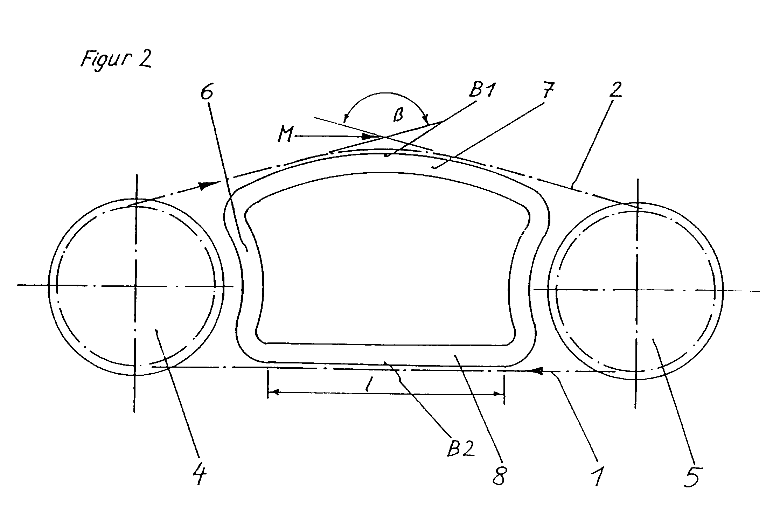

Figur 2 zeigt ein zwischen Lasttrum 1 und Lostrum 2 eines nichtübersetzenden, rechtsdrehenden Kettentriebes führungsformpaariges, Spann- und Dämpfungselement 6 mit einem elastischen Bogenstück 7 und einem mit diesem verbundenen gegenüberliegenden geraden Kettenführungsstück 8.

Es ist jeweils führungsformpaarig zur Kette durch ein rechteckiges Führungsprofil am Außenumfang des elastischen Bogenstückes und des geraden Kettenführungsstückes. Das Führungsprofil ist schmaler als die lichte Weite der Kette. Der Abstand B1,B2 des elastischen Bogenstückes zum gegenüberliegenden geraden Kettenführungsstück ist größer als der Durchmesser des größten Kettenrades des Kettentriebes. Der Lasttrum zwischen dem treibenden Kettenrad 4 und dem getriebenen Kettenrad 5 verläuft gerade, während der Lostrum durch die Spannkraft des selbsttätigen Spann- und Dämpfungselementes eine Lostrumwinkelung β < 180° aufweist. Die für die Lostrumwinkelung nutzbare Lostrumlänge wird durch den Lostrumdurchhang gewährleistet.

Die Spannkraft wird dadurch erzeugt, daß die durch Belastung des elastischen Bogens in Richtung des geraden Kettenführungsstückes bewirkte geringer gekrümmte und vorgespannte Bogenform die ursprünglich stärker gekrümmte und ungespannte Bogenform anstrebt.

Durch die Formpaarung zur Kettenspur von Last- und Lostrum ist das selbsttätige Spann- und Dämpfungselement selbstführend und zwischen diesen gleitend gelagert. Durch das Erzeugen der Lostrumwinkelung ist es in seinem Abstand zu den Kettenrädern selbstregelnd; es strebt stets gleitend das Spannkraftminimum, zugleich größter Abstand B1,B2 , welches im Bereich der größten Trumspreizweite liegt, an. Damit entzieht es sich selbst neben der Spurführung in der Kette einen weiteren Freiheitsgrad und nimmt in der Abstandsmitte der Kettenräder eine Lage ein, in der es kein Kettenrad berührt.

Infolge der entgegengerichteten Bewegung der Kettentrume wirken auf das selbsttätige Spann- und Dämpfungselement tangential angreifende Momente aus der Reibung zu den Trumen. Diese Momente summieren sich zum Drehmoment M. Die Länge 1 des geraden Kettenführungsstückes ist größer als der Abstand B1, B2.

Es liegt damit eine ausreichend große Unterstützungsfläche und in Verbindung mit der Spannkraft ein ausreichend großes Standmoment des selbsttätigen Spann- und Dämpfungselementes auf dem Lasttrum vor; es besteht Standsicherheit gegen das Drehmoment M.

Dieses beispielsweise erläuterte selbsttätige Spann- und Dämpfungselement ist platzsparend in Kettentrieben mit kleinen Achsabständen einsetzbar.

**Patentansprüche**

1.  Selbsttätiges Spann- und Dämpfungselement für Endloskettentriebe, welches als elastisch verformbares Element zwischen Lostrum und Lasttrum angeordnet ist und ständig auf beide Trume gleichzeitig wirkt, gekennzeichnet durch einen zwischen der Form eines konzentrischen Ringes oder dessen radialen Verformungsvariationen und der Form einer Cassinischen Kurve mit ellipsenähnlicher Gestalt verformbaren Ring mit mantelseitigem, zum Profil der Kette mit Führungsspiel passendem Führungsprofil, dessen äußerer Ringdurchmesser oder kleinste Achse $\overline{A1,A2}$ größer ist als der Durchmesser des größten Kettenrades des Kettentriebes.

2. Selbsttätiges Spann- und Dämpfungselement für Endloskettentriebe, welches als elastisch verformbares Element zwischen Lostrum und Lasttrum angeordnet ist und ständig auf beide Trume gleichzeitig wirkt, gekennzeichnet durch ein elastisches Bogenstück mit mantelseitigem, zum Profil der Kette mit Führungsspiel passendem Führungsprofil und ein mit einem Abstand $\overline{B1,B2}$ , der größer ist als der Durchmesser des größten Kettenrades des Kettentriebes, gegenüberliegendes, starr oder elastisch integriertes gerades oder gebogenes Kettenführungsstück mit mantelseitigem, zum Profil der Kette mit Führungsspiel passendem Führungsprofil, dessen Länge 1 größer ist als der Abstand $\overline{B1,B2}$ .

## Claims

1. Automatic tensioner and damper for endless chain drives that is configured as an elastically deformable element situated between their slack runs and their tensioned runs and constantly acts simultaneously on both of said runs, characterized by the fact that said element has a roughly elliptically shaped deformable ring having a shape intermediate between that of a concentric annulus, or variations thereon created by radially deforming same, and a Cassini oval, where said deformable ring has a profiled guide on its inner surface matching the profiles of the chains of said drives while providing adequate running clearances, and where the outer diameter, or the minor axis, A1-A2, of said deformable ring exceeds the diameter of the largest sprocket of said drives.

2. Automatic tensioner and damper for endless chain drives that is configured as an elastically deformable element situated between their slack runs and their tensioned runs and constantly acts simultaneously on both of said runs characterized by the fact that said element has a flexible curved member with a profiled guide on its inner surface matching the profiles of the chains of said drives while providing adequate running clearances and an integral, rigid or flexible, straight or curved, chain guide having a profiled guide on its inner surface, where the length, 1, of said chain guide exceeds said distance, B1-B2, and said chain guide is situated across from, and at a distance B1-B2 from, said curved member, and where said distance, B1-B2, exceeds the diameter of the largest sprocket of said drives.

## Revendications

1. Élément automatique de tension et d'amortissement pour les transmissions par chaîne sans fin, lequel est placé comme élément élastique déformable entre le boût à vide et le boût sous charge et agissant simultanément de manière permanente sur les deux boûts, caractérisé par la forme d'une bague déformable ayant une forme variant entre celle d'une bague concentrique ou celle de ses variations radiales de déformation et la forme d'une courbe cassinoïde à forme ellipsoïde, munie d'une couronne déformable avec latéralement à sa paroi en correspondance avec le profil de la chaîne avec un jeu de guidage adapté au profil de guidage, dont le diamétre extérieur de bague ou le plus petit axe A1, A2 est plus grand que le diamètre de la plus grande roue dentée de la transmission par chaîne.

2. Élément automatique de tension et d'amortissement pour les transmissions par chaîne sans fin, lequel est placé comme élément élastique déformable entre le boût à vide et le boût sous charge et agissant simultanément de manière permanente sur les deux boûts, caractérisé par une partie courbe élastique, latéralement à sa paroi, en correspondance avec le profil de la chaîne avec un jeu de guidage adapté au profil de guidage et un écart B1, B2 qui est plus grand que le diamètre de la plus grande roue de la transmission par chaîne, placé à l'opposé de la partie de guidage de la chaîne intégrée fléchissante ou droite, rigide ou élastique avec latéralement à sa paroi en correspondance avec le profil de la chaîne avec un jeu de guidage adapté au profil de guidage dont la longueur 1 est plus grande que l'écart B1, B2.

Figur 1

Figur 2